# FASCICULE DE BREVET EUROPEEN

(11) **EP 3 746 265 B1**
(45) Date de publication et mention de la délivrance du brevet: **02.03.2022**
(21) Numéro de dépôt: 19700731.3
(22) Date de dépôt: 21.01.2019
(51) Int. Cl.: B24C 1/00, B60G 21/05, B24C 1/10

(54) **PROCÉDÉ DE RÉALISATION D'UNE TRAVERSE TUBULAIRE D'ESSIEU NON TREMPÉE COMPORTANT UNE ÉTAPE DE GRENAILLAGE**
VERFAHREN ZUR HERSTELLUNG EINES NICHT VERGÜTETEN ROHRFÖRMIGEN ACHSQUERTRÄGERS MIT EINEM KUGELSTRAHLSCHRITT
METHOD FOR PRODUCING A NON-QUENCHED TUBULAR AXLE CROSSPIECE COMPRISING A SHOT-PEENING STEP

(30) Priorité: 01.02.2018 FR 1850854
(43) Date de publication de la demande: 09.12.2020
(73) Titulaire: Renault s.a.s, 92100 Boulogne Billancourt (FR)
(72) Inventeur: ROLLET, Remi, 91190 GIF SUR YVETTE (FR)
(74) Mandataire: Renault Group
(86) Numéro de dépôt international: PCT/EP2019/051330
(87) Numéro de publication internationale: WO 2019/149550

(56) Documents cités:
- WO-A2-01/45970
- FR-A1- 2 878 786
- FR-A1- 2 905 290

## Description

### DOMAINE TECHNIQUE DE L'INVENTION

L'invention se rapporte à un procédé de réalisation d'une traverse tubulaire d'essieu pour un véhicule automobile, la traverse d'essieu présentant un profil final, le procédé comportant :
- une étape de formage pour conformer une traverse tubulaire présentant un profil initial en traverse tubulaire présentant le profil final ;
- au moins une étape de grenaillage d'au moins certaines zones à traiter de la face interne de la traverse pour créer des précontraintes de compression sur lesdites zones à traiter.

Un tel procédé est connu du document FR 2 905 290 A1.

### ARRIERE PLAN TECHNIQUE DE L'INVENTION

Il est déjà connu de réaliser des traverse d'essieu à profil fermé par formage d'un tube métallique. Ce type de traverse est particulièrement est utilisé pour la fabrication d'essieux de type "semi-rigide" qui équipent généralement les trains arrière de véhicules automobiles. Un tel essieu comporte principalement deux bras longitudinaux entre lesquels s'étend ladite traverse d'essieu qui est élastique en torsion et rigide en flexion.

De telles traverses d'essieu sont constamment soumises à des vibrations et elles subissent de nombreux chocs au cours de la vie du véhicule qu'elles équipent. Pour éviter que ces différentes sollicitations n'aboutissent à la rupture de la traverse par fatigue, il est connu d'exposer sa faces interne à une opération de grenaillage de précontrainte, parfois connue sous sa dénomination anglosaxonne "shot peening".

Le grenaillage de précontrainte consiste à bombarder la surface interne de la traverse avec des projectiles de petite taille, appelés grenaille, avec une force suffisante pour créer une déformation plastique de la surface. Ces déformations plastiques permettent de créer des précontraintes surfacique de compression sur la face interne de la traverse. Cela favorise la résistance à la fatigue de la traverse.

La grenaille peut être formée par des billes de métal de verre ou de céramique. La grenaille est généralement projetée au moyen d'une buse de projection.

Historiquement, les traverses à profil fermé obtenues par formage d'un tube métallique subissent une opération de trempe après leur formage afin de conférer certaines propriétés de dureté aux surfaces de la traverse. L'opération de trempe consiste à soumettre les surfaces de la traverse à de très hautes températures puis à un refroidissement rapide.

Or, il est connu depuis bien longtemps que la précontrainte surfacique de compression conférée par l'opération de grenaillage de précontrainte est annulée sous l'effet de hautes températures.

De ce fait, l'homme du métier a toujours pris soin de réaliser l'opération de grenaillage chronologiquement après l'opération de trempe, et, par conséquence, après l'opération de formage.

Il est désormais connu de réaliser des traverses à profil fermé par formage de tube sans que le procédé de fabrication ne comprenne d'opération de trempe. Ceci est notamment permis par l'évolution des matériaux métalliques constituant la traverse, c'est par exemple le cas pour les traverses réalisées en acier à très haute résistance du type "Complex Phase 800" fabriqué par la société Arcelor Mittal.

Cependant, l'usage consistant à réaliser l'opération de grenaillage après l'opération de formage demeure un préjugé technique fortement ancré dans les pratiques de l'homme du métier.

Or, réaliser l'opération de grenaillage après l'opération de formage ne permet pas de traiter de façon satisfaisante la totalité de la face interne de la traverse d'essieu. En effet, le profil de la traverse d'essieu présente fréquemment des zones trop étroites pour être accessibles à la buse de projection.

Dans certains cas, certaines zones de la traverse sont plus étroites que la taille de la grenaille. Ces zones ne sont donc pas traitées du tout.

En outre, il arrive que, du fait de la forme du profil, la grenaille ne puisse pas être totalement évacuée de l'intérieur de la traverse après l'opération de grenaillage. Il en résulte que, lors du fonctionnement du véhicule, la grenaille résiduelle est mise en mouvement par les vibrations du véhicule, ce qui provoque des nuisances sonores par chocs avec les faces internes de la traverse.

### BREF RESUME DE L'INVENTION

L'invention propose un procédé de réalisation d'une traverse tubulaire d'essieu pour un véhicule automobile, la traverse d'essieu présentant un profil final, le procédé comportant :
- une étape de formage pour conformer une traverse tubulaire présentant un profil initial en traverse tubulaire présentant le profil final ;
- au moins une étape de grenaillage d'au moins certaines zones à traiter de la face interne de la traverse pour créer des précontraintes de compression sur lesdites zones à traiter ;
caractérisé en ce qu'au moins une première étape de grenaillage est effectuée avant l'étape de formage.

Selon d'autres caractéristiques du procédé réalisé selon des modes de réalisation de l'invention :
- une deuxième étape de grenaillage est réalisée après l'étape de formage ;
- la traverse présente un profil initial circulaire ;
- au cours de la première étape de grenaillage, la face interne de la traverse est partiellement soumise au grenaillage, la position angulaire de la traverse étant indexée de manière que les zones traitées occupent une position déterminées dans le profil final ;
- au cours de la première étape de grenaillage, la totalité de la face interne de la traverse est soumise au grenaillage ;
- chaque étape de grenaillage est réalisée par projection de grenailles présentant une dimension moyenne déterminée, le profil final de la traverse tubulaire présentant des régions dans lesquelles des portions de faces internes sont rapprochées l'une de l'autre d'une distance sensiblement égale ou inférieure à ladite dimension moyenne déterminée ;
- chaque étape de grenaillage comporte une opération d'évacuation de la grenaille présente dans la traverse ;
- la première étape de grenaillage comporte une opération de projection de grenailles au moyen d'une buse, la buse étant amenée en vis-à-vis des zones de face interne à traiter pendant ladite opération ;
- le procédé comporte une étape préalable de préformage pour conformer une traverse tubulaire à profil fermé en une traverse tubulaire présentant le profil initial, cette étape préalable étant réalisée avant la première étape de grenaillage ;

L'invention concerne aussi une traverse tubulaire réalisée selon le procédé selon l'une quelconque des revendications 1-9, caractérisée en ce qu'elle présente un profil fermé présentant des régions dans lesquelles des portions de faces internes grenaillées sont rapprochées l'une de l'autre d'une distance sensiblement égale ou inférieure à la dimension moyenne de la grenaille utilisée pour l'opération de grenaillage desdites portions de faces internes.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente une traverse pour un essieu de véhicule automobile réalisée selon un mode de réalisation de l'invention et obtenue notamment par déformation ;
- la figure 2 est une vue en perspective qui représente un essieu de train arrière de véhicule automobile comportant une traverse de la figure 1 ;
- la figure 3 est une vue en coupe transversale verticale selon le plan de coupe 3-3 de la figure 1 qui représente la traverse de la figure 1 ;
- la figure 4 est une vue en perspective qui représente la traverse de la figure 1 avant l'étape de déformation ;
- la figure 5 est une vue en coupe transversale selon le plan de coupe 5-5 de la figure 4 qui représente la traverse de la figure 4 en cours de traitement par grenaillage ;
- la figure 6 est une vue en coupe axiale selon le plan de coupe 6-6 de la figure 4 qui représente la traverse de la figure 4 en cours de traitement par grenaillage ;
- la figure 7 est un schéma-bloc qui représente le procédé de fabrication de la traverse de la figure 1 à partir de la traverse de la figure 4 réalisé selon un mode de réalisation de l'invention ;
- la figure 8 est un schéma-bloc qui représente le procédé de fabrication de la traverse de la figure 1 à partir de la traverse de la figure 4 réalisé selon une variante de réalisation de l'invention.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations longitudinale, dirigée selon l'axe de la traverse, transversale et verticale, dirigée de bas en haut. La direction verticale est utilisée à titre de repère géométrique sans rapport avec la direction de la gravité.

Dans la suite de la description, le terme "traiter" est utilisé pour désigner une face traitée par grenaillage.

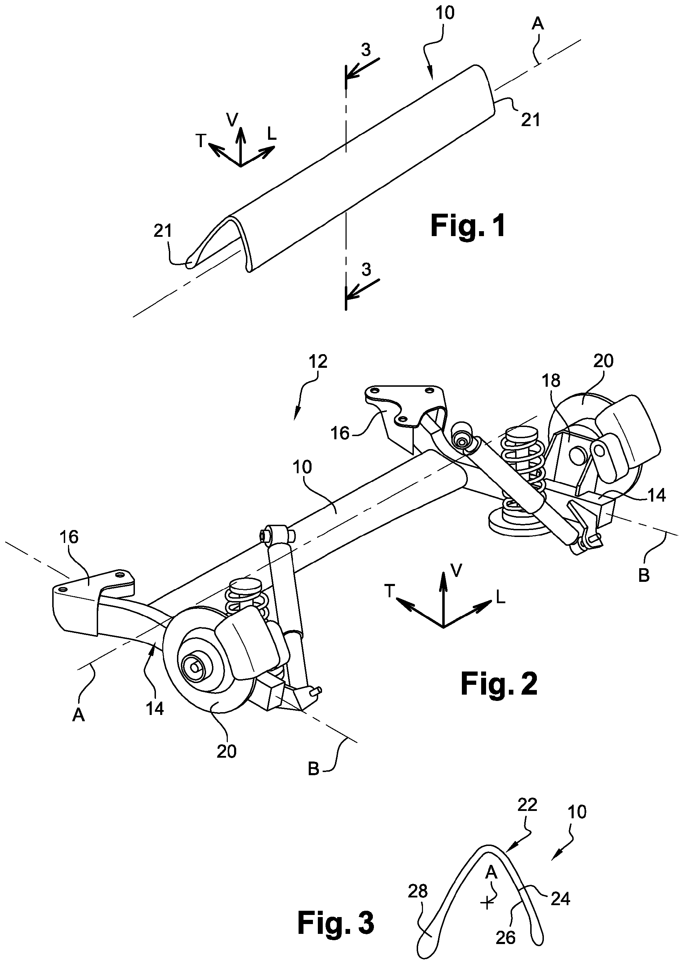

On a représenté à la figure 1 une traverse 10 pour un essieu de véhicule automobile. La traverse 10 présente un axe "A" principal longitudinal. La traverse 10 est par exemple destinée à équiper un essieu 12 semi-rigide tel que celui qui est représenté à la figure 2.

Un tel essieu 12 comporte deux bras 14 parallèles transversaux, dits bras 14 longitudinaux, dont chacun présente un axe "B" principal globalement transversal qui s'étend globalement dans le sens de déplacement du véhicule automobile. Les deux bras 14 sont reliés entre eux par la traverse 10 d'axe "A" principal longitudinal.

Chaque bras 14 s'étend depuis une première extrémité 16 avant jusqu'à une deuxième extrémité 18 arrière. La première extrémité 16 avant est destinée à être montée pivotante autour d'un axe transversal sur un châssis (non représenté) du véhicule. Un tronçon d'extrémité arrière de chaque bras 14 est muni d'un porte-fusée 18 qui est destiné à supporter de manière rotative une roue (non représentée) arrière associée du véhicule ainsi qu'un disque ou tambour 20 de frein associé à la roue.

La traverse 10 est réalisée de manière à être rigide en flexion dans le plan vertical et dans le plan transversal et de manière à être souple en torsion autour de son axe "A" principal.

La traverse 10 se présente ici sous la forme d'un tube en acier présentant, en section selon un plan vertical transversal, un profil fermé. Dans l'exemple représenté aux figures, la traverse 10 présente un profil fermé sur toute sa longueur. Le profil est ici identique sur toute la longueur de la traverse 10. La traverse présente deux extrémités 21 longitudinale opposées qui sont ouvertes.

La traverse 10 présente plus particulièrement une paroi 22 tubulaire présentant une face 24 interne qui est tournée vers l'intérieur de la traverse 10, et une face 26 externe qui est tournée vers l'extérieur de la traverse.

Comme cela est représenté à la figure 3, la traverse 10 présente un profil fermé dans lequel la paroi 22 tubulaire de la traverse 10 entoure un espace 28. L'espace présente ici, à titre non limitatif, une forme de chevron. Dans certaines zones du profil de la traverse, notamment vers la pointe du chevron, les portions de faces 24 internes en vis-à-vis sont extrêmement proche l'une de l'autre, voire se touchent.

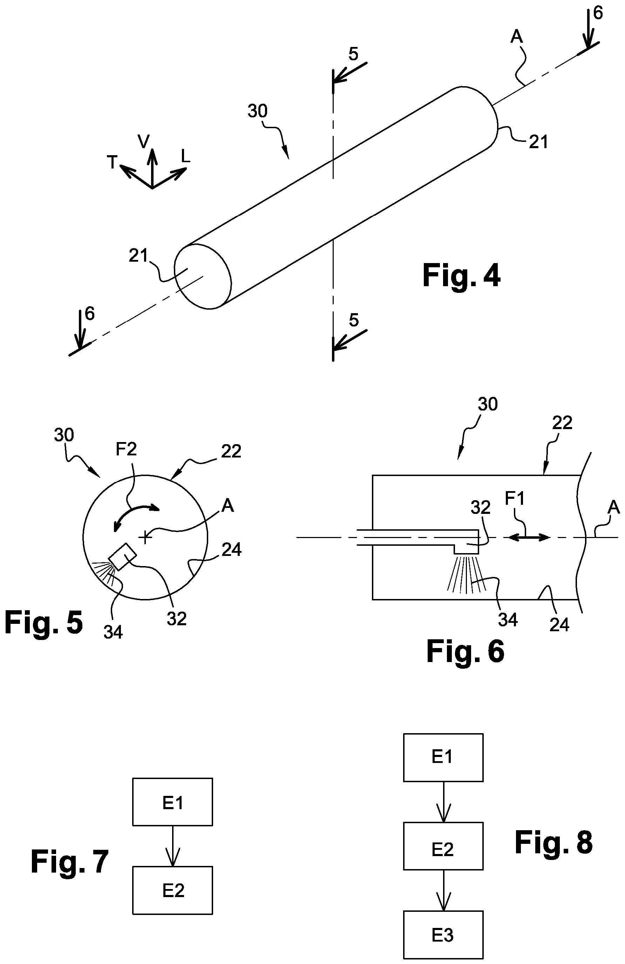

L'invention concerne un procédé de réalisation d'une telle traverse 10 tubulaire, la traverse 10 d'essieu présentant le profil final fermé, ici en forme de chevron à partir d'une traverse 30 présentant un profil initial fermé, comme cela est représenté à la figure 4.

Le profil initial de la paroi 22 tubulaire se présente ici sous la forme d'un cercle, comme cela est représenté à la figure 5. Le profil initial peut bien entendu présenter d'autres formes, par exemple carré, polygonale ou encore oblongue.

De manière connue, la traverse 30 présentant le profil initiale est conformée en traverse 10 d'essieu présentant le profil final par formage, par exemple par roulage ou emboutissage, lors d'une étape "E2" de formage.

Pour permettre à la traverse 10 finale de présenter une bonne résistance à la rupture par fatigue, il est prévu au moins une première étape "E1" de grenaillage pour traiter au moins certaines zones à traiter de la face 24 interne de la traverse 10 pour créer des précontrainte de compression sur lesdites zones à traiter.

Selon un mode de réalisation de l'invention, au moins une première étape "E1" de grenaillage est effectuée chronologiquement avant l'étape "E2" de formage, comme cela est illustré à la figure 7.

L'étape "E1" de grenaillage consiste à projeter de la grenaille, par exemple des billes de métal, à grande vitesse sur les zones à traiter de la face interne. La grenaille présente une dimension moyenne déterminée. Le profil final de la traverse tubulaire présentant des régions dans lesquelles des portions de faces 24 internes sont rapprochées l'une de l'autre d'une distance sensiblement égale ou inférieure à ladite dimension moyenne déterminée. Dans l'exemple représenté à la figure 3, les portions de face 24 internes en vis-à-vis situées à proximité de la pointe du chevron sont par exemple écartées d'une distance inférieure ou égale à la taille moyenne de la grenaille.

Comme cela a été schématiquement représenté aux figures 5 et 6, l'étape "E1" de grenaillage comporte une opération de projection de la grenaille au moyen d'une buse 32 qui est insérée dans la traverse 30 initiale.

Un tel procédé est particulièrement avantageux lorsque le profil initial de la traverse 30 entoure un espace permettant d'insérer facilement la buse 32. La buse 32 est ainsi amenée en vis-à-vis des zones à traiter pendant ladite opération. Les projections de grenaille, symbolisées par des traits 34 sortant de la buse 32 sont donc dirigées globalement orthogonalement à la zone à traiter afin d'obtenir une meilleure efficacité de l'opération de grenaillage.

Comme cela est représenté à la figure 6, la buse 32 est susceptible d'être insérée et déplacée longitudinalement à l'intérieur de la traverse 30, comme indiqué par la flèche "F1", afin de pouvoir traiter la face 24 interne de la traverse 30 sur toute sa longueur.

En outre, lorsque cela est nécessaire, il est aussi possible de faire pivoter la buse 32 autour de l'axe longitudinal de la traverse 30 pour traiter un large secteur angulaire de la traverse 30.

Durant son procédé de réalisation, la traverse 10 ne subit aucune exposition à de très hautes températures, et notamment pas d'étape de trempe. De ce fait, même après l'étape "E2" de formage, les zones de la face 24 interne de la traverse 10 qui ont été traitées par grenaillage demeurent soumises à une précontrainte de compression suffisante pour augmenter significativement sa résistance à la rupture par fatigue.

Selon une première variante de l'invention, au cours de la première étape "E1" de grenaillage, la totalité de la face 24 interne de la traverse 30 est soumise au grenaillage.

Selon une deuxième variante de l'invention, au cours de la première étape "E1" de grenaillage, la face 24 interne de la traverse 30 est partiellement soumise au grenaillage. Ainsi, seules quelques zones de la face 24 interne sont traitées par grenaillage, d'autres zones restant exemptes dudit traitement par grenaillage. Etant donné que le profil final de la traverse 10 présente généralement une forme non axisymétrique, la position angulaire de la traverse 30 est indexée lors de la première étape "E1" de grenaillage et au cours de l'étape "E2" de formage, de manière que les zones traitées occupent une position déterminées dans le profil final.

A la fin de l'étape "E1" de grenaillage, une opération d'évacuation de la grenaille présente dans la traverse 30 est réalisée. Cette opération d'évacuation est particulièrement facilité lorsque l'étape "E1" de grenaillage est réalisée avant l'étape "E2" de formage car le profil initial de la traverse 30 présente une forme favorisant l'évacuation de la grenaille par gravité simplement en penchant la traverse 30 pour en extraire la grenaille par l'extrémité ouverte située plus basse que l'autre extrémité ouverte. La grenaille est libre de rouler contre la face 24 interne car le profil initial ne comporte pas de régions étroites dans lesquels de la grenaille pourrait se coincer.

Selon une variante de réalisation de l'invention qui est représentée à la figure 8, une deuxième étape "E3 de grenaillage est réalisée après l'étape "E2" de formage, en plus de la première étape "E1" de grenaillage. Cette deuxième étape "E3" de grenaillage permet de traiter à nouveau des zones déjà traitées ou de traiter pour la première fois une zone qui n'a pas été traitée lors de la première étape "E1" de grenaillage. Cette deuxième étape "E1" de grenaillage est bien entendue destinée à traiter les zones de la face 24 interne qui sont accessibles dans le profil final de la traverse 10.

Selon une autre variante de l'invention compatible avec les variantes précédemment décrites, le procédé de réalisation de la traverse comporte une étape de préformage de la traverse qui est réalisée avant la première étape de grenaillage. Lors de cette étape de préformage une traverse tubulaire présentant un profil fermé est formée, par exemple par roulage ou par emboutissage, pour obtenir le profil initial. On peut ainsi conformer une traverse présentant un profil circulaire en une traverse présentant un profil en forme de polygone. Ceci permet notamment de réaliser la première étape de grenaillage sur des portion de face interne déjà partiellement déformée.

## Revendications

1. Procédé de réalisation d'une traverse (10) tubulaire d'essieu (12) pour un véhicule automobile, la traverse (10) d'essieu présentant un profil final, le procédé comportant :
- une étape (E2) de formage pour conformer une traverse (30) tubulaire présentant un profil initial en traverse (10) tubulaire présentant le profil final ;
- au moins une étape (E1) de grenaillage d'au moins certaines zones à traiter de la face (24) interne de la traverse pour créer des précontraintes de compression sur lesdites zones à traiter ;
**caractérisé en ce qu'**au moins une première étape (E1) de grenaillage est effectuée avant l'étape (E2) de formage.

2. Procédé selon la revendication précédente, **caractérisé en ce qu'**une deuxième étape (E3) de grenaillage est réalisée après l'étape (E2) de formage.

3. Procédé selon l'une quelconque des revendications précédentes, **caractérisé en ce que** la traverse (30) présente un profil initial circulaire.

4. Procédé selon l'une quelconque des revendications précédentes, **caractérisé en ce qu'**au cours de la première étape (E1) de grenaillage, la face (24) interne de la traverse est partiellement soumise au grenaillage, la position angulaire de la traverse (30) étant indexée de manière que les zones traitées occupent une position déterminées dans le profil final.

5. Procédé selon l'une quelconque des revendications 1 à 3, **caractérisé en ce qu'**au cours de la première étape (E1) de grenaillage, la totalité de la face (24) interne de la traverse (30) est soumise au grenaillage.

6. Procédé selon l'une quelconque des revendications précédentes, **caractérisé en ce que** chaque étape (E1, E3) de grenaillage est réalisée par projection de grenailles (34) présentant une dimension moyenne déterminée, le profil final de la traverse (10) tubulaire présentant des régions dans lesquelles des portions de faces (24) internes sont rapprochées l'une de l'autre d'une distance sensiblement égale ou inférieure à ladite dimension moyenne déterminée.

7. Procédé selon l'une quelconque des revendications précédentes, **caractérisé en ce que** chaque étape (E1, E3) de grenaillage comporte une opération d'évacuation de la grenaille (34) présente dans la traverse (10, 30).

8. Procédé selon l'une quelconque des revendications précédentes, **caractérisé en ce que** la première étape (E1) de grenaillage comporte une opération de projection de grenailles au moyen d'une buse (32), la buse (32) étant amenée en vis-à-vis des zones de face (24) interne à traiter pendant ladite opération.

9. Procédé selon l'une quelconque des revendications précédentes, **caractérisé en ce qu'**il comporte une étape préalable de préformage pour conformer une traverse tubulaire à profil fermé en la traverse (30) tubulaire présentant le profil initial, cette étape préalable étant réalisée avant la première étape (E1) de grenaillage.

10. Traverse (10) tubulaire réalisée selon le procédé selon l'une quelconque des revendications précédentes, **caractérisée en ce qu'**elle présente un profil fermé présentant des régions dans lesquelles des portions de faces (24) internes grenaillées sont rapprochées l'une de l'autre d'une distance sensiblement égale ou inférieure à la dimension moyenne de la grenaille utilisée pour l'opération de grenaillage desdites portions de faces (24) internes.

## Patentansprüche

1. Verfahren zur Herstellung eines rohrförmigen Querträgers (10) einer Achse (12) für ein Kraftfahrzeug, wobei der Achsquerträger (10) ein Endprofil aufweist, wobei das Verfahren Folgendes aufweist:
- einen Schritt (E2) des Formens zur Ausbildung eines rohrförmigen Querträgers (30) mit einem Ausgangsprofil zu einem rohrförmigen Querträger (10) mit dem Endprofil;
- mindestens einen Schritt (E1) des Kugelstrahlens wenigstens bestimmter zu behandelnder Bereiche der Innenseite (24) des Querträgers, um Kompressionsvorspannungen auf den zu behandelnden Bereichen zu erzeugen;
**dadurch gekennzeichnet, dass** wenigstens ein erster Schritt (E1) des Kugelstrahlens vor dem Schritt (E2) des Formens durchgeführt wird.

2. Verfahren nach dem vorhergehenden Anspruch, **dadurch gekennzeichnet, dass** ein zweiter Schritt (E3) des Kugelstrahlens nach dem Schritt (E2) des Formens durchgeführt wird.

3. Verfahren nach einem der vorhergehenden Ansprüche, **dadurch gekennzeichnet, dass** der Querträger (30) ein kreisförmiges Ausgangsprofil aufweist.

4. Verfahren nach einem der vorhergehenden Ansprüche, **dadurch gekennzeichnet, dass** beim ersten Schritt (E1) des Kugelstrahlens die Innenseite (24) des Querträgers teilweise dem Kugelstrahlen unterzogen wird, wobei die Winkelposition des Querträgers (30) so indexiert ist, dass die behandelten Bereiche eine bestimmte Position im Endprofil einnehmen.

5. Verfahren nach einem der Ansprüche 1 bis 3, **dadurch gekennzeichnet, dass** beim ersten Schritt (E1) des Kugelstrahlens die gesamte Innenseite (24) des Querträgers (30) dem Kugelstrahlen unterzogen wird.

6. Verfahren nach einem der vorhergehenden Ansprüche, **dadurch gekennzeichnet, dass** jeder Schritt (E1, E3) des Kugelstrahlens durch Schleudern von Strahlmittel (34) einer bestimmten mittleren Abmessung durchgeführt wird, wobei das Endprofil des rohrförmigen Querträgers (10) Regionen aufweist, in welchen Abschnitte von Innenseiten (24) einander um einen Abstand angenähert sind, der im Wesentlichen gleich oder kleiner als die bestimmte mittlere Abmessung ist.

7. Verfahren nach einem der vorhergehenden Ansprüche, **dadurch gekennzeichnet, dass** jeder Schritt (E1, E3) des Kugelstrahlens einen Arbeitsgang des Entfernens des Strahlmittels (34), das im Querträger (10, 30) vorhanden ist, aufweist.

8. Verfahren nach einem der vorhergehenden Ansprüche, **dadurch gekennzeichnet, dass** der erste Schritt (E1) des Kugelstrahlens einen Arbeitsgang des Schleuderns von Strahlmittel mittels einer Düse (32) aufweist, wobei die Düse (32) während des Arbeitsgangs gegenüber die zu behandelnden Bereiche der Innenseite (24) gebracht wird.

9. Verfahren nach einem der vorhergehenden Ansprüche, **dadurch gekennzeichnet, dass** es einen vorhergehenden Schritt des Vorformens aufweist, um einen rohrförmigen Querträger mit geschlossenem Profil zum rohrförmigen Querträger (30) mit dem Ausgangsprofil auszubilden, wobei dieser vorhergehende Schritt vor dem ersten Schritt (E1) des Kugelstrahlens durchgeführt wird.

10. Rohrförmiger Querträger (10), der nach dem Verfahren nach einem der vorhergehenden Ansprüche hergestellt ist, **dadurch gekennzeichnet, dass** er ein geschlossenes Profil mit Regionen aufweist, in welchen Abschnitte von kugelgestrahlten Innenseiten (24) einander um einen Abstand angenähert sind, der im Wesentlichen gleich oder kleiner als die mittlere Abmessung des Strahlmittels ist, das für den Arbeitsgang des Kugelstrahlens der Abschnitte von Innenseiten (24) genutzt wird.

## Claims

1. Method for producing a tubular crosspiece (10) for an axle (12) for a motor vehicle, the crosspiece (10) having a final profile, the method comprising:
- a shaping step (E2) for shaping a tubular crosspiece (30) having an initial profile into a tubular crosspiece (10) having the final profile;
- at least one step (E1) of shot-peening at least certain regions to be treated of the internal face (24) of the crosspiece in order to create compressive residual stresses in said regions to be treated;
**characterized in that** at least one first shot-peening step (E1) is carried out prior to the shaping step (E2) .

2. Method according to the preceding claim, **characterized in that** a second a shot-peening step (E3) is carried out after the shaping step (E2).

3. Method according to either one of the preceding claims, **characterized in that** the crosspiece (30) has a circular initial profile.

4. Method according to any one of the preceding claims, **characterized in that**, during the first shot-peening step (E1), the internal face (24) of the crosspiece is partially subjected to shot-peening, the angular position of the crosspiece (30) being indexed in such a way that the treated regions occupy a determined position in the final profile.

5. Method according to any one of Claims 1 to 3, **characterized in that**, during the first shot-peening step (E1), all of the internal face (24) of the crosspiece (30) is subjected to shot-peening.

6. Method according to any one of the preceding claims, **characterized in that** each shot-peening step (E1, E3) is carried out by spraying shot (34) having a given average dimension, the final profile of the tubular crosspiece (10) having regions in which portions of internal faces (24) are brought closer together by a distance substantially equal to or less than said given average dimension.

7. Method according to any one of the preceding claims, **characterized in that** each shot-peening step (E1, E3) comprises an operation of removing shot (34) present in the crosspiece (10, 30).

8. Method according to any one of the preceding claims, **characterized in that** the first shot-peening step (E1) comprises an operation of spraying shot using a nozzle (32), the nozzle (32) being brought to face regions of an internal face (24) to be treated during said operation.

9. Method according to any one of the preceding claims, **characterized in that** it comprises a prior preforming step to shape a tubular crosspiece having a closed profile into the tubular crosspiece (30) having the initial profile, this prior step being carried out before the first shot-peening step (E1).

10. Tubular crosspiece (10) produced by the method according to any one of the preceding claims, **characterized in that** it has a closed profile having regions in which shot-peened portions of internal faces (24) are brought closer together by a distance substantially equal to or less than the average dimension of the shot used for the operation of shot-peening said portions of internal faces (24).
